# EUROPÄISCHE PATENTSCHRIFT

(11) **EP 1 916 165 B1**
(45) Veröffentlichungstag und Bekanntmachung des Hinweises auf die Patenterteilung: **22.12.2010**
(21) Anmeldenummer: 07118966.6
(22) Anmeldetag: 22.10.2007
(51) Int. Cl.: B60T 7/10

(54) **Handbremseinrichtung**
Handbrake device
Dispositif de frein à main

(30) Priorität: 24.10.2006 AT 17932006
(43) Veröffentlichungstag der Anmeldung: 30.04.2008
(73) Patentinhaber: DGS Druckguss Systeme AG, 9015 St. Gallen (CH)
(72) Erfinder: Pichlbauer, Peter, 9403 GOLDACH (CH); Schmid, Hugo, 9621 OBERHELFENSCHWIL (CH); Schober, Michael, 9303 Wittenbach (CH); Huber, Thomas, 9100 HERISAU (CH); Lantz, Klaus, 9015 ST. GALLEN (CH)
(74) Vertreter: Babeluk, Michael

(56) Entgegenhaltungen:
- EP-A- 1 273 495
- FR-A- 2 743 540

## Beschreibung

Die Erfindung betrifft eine Handbremseinrichtung mit einem ersten Hebelarm zur Betätigung durch eine Person und einem zweiten Hebelarm zur Verbindung mit einem vorzugsweise durch ein Seil oder eine Stange gebildeten Betätigungsteil, wobei erster und zweiter Hebelarm als separate Bauteile ausgebildet sind, welche drehfest miteinander verbunden sind, und wobei die Hebelarme in einem fahrzeugfesten Halter um eine Drehachse drehbar gelagert sind, wobei der erste und der zweite Hebelarm über eine Formschlussverbindung unmittelbar miteinander verbunden, vorzugsweise formschlüssig ineinander gesteckt sind und dass der erste Hebelarm über ein erstes Lager und der zweite Hebelarm über ein zweites Lager im fahrzeugfesten Halter gelagert ist.

Im Automobilbau werden im wachsenden Umfang Leichtbaufunktionsteile eingesetzt, um das Fahrzeuggewicht zu verringern. Dabei handelt es sich im Allgemeinen um Bauteile, die mechanische Belastungen übertragen oder aufnehmen sollen, wie beispielsweise einen Handbremshebel. Die Fertigung solcher Bauteile im Aluminium- oder Magnesium-Druckgussverfahren oder im Kunststoffspritzgussverfahren ermöglicht es, eine beträchtliche Gewichtsreduktion bei vorbestimmten Festigkeitseigenschaften zu erreichen.

Aus der EP 1 273 495 A2 ist ein Handbremshebel für Kraftfahrzeuge bekannt, welcher mittels eines Druckgussverfahrens hergestellt ist. Erster und zweiter Hebelarm des Handbremshebels sind dabei als einteiliges Druckgussteil ausgebildet. Durch die relativ komplizierte Formgebung ist allerdings ein relativ hoher Fertigungsaufwand erforderlich.

Die EP 1 666 322 A1 offenbart eine Handbremseinrichtung mit einem ersten und einem zweiten Hebelarm, wobei der erste und der zweite Hebelarm über eine Formschlussverbindung miteinander verbunden sind. Der erste Hebelarm wird über ein erstes Lager und der zweite Hebelarm über ein zweites Lager im fahrzeugfesten Halter gelagert.

Eine Handbremseinrichtung mit zwei Hebelarmen ist auch aus der GB 2 421 991 A bekannt, wobei erster und zweiter Hebelarm als separate Bauteile ausgebildet sind, welche drehfest miteinander verbunden sind.

Des weiteren offenbart die DE 20 2004 019 066 U1 eine Handbremse für ein Kraftfahrzeug mit einem Hebel, der drehbar um eine Welle in einem an der Fahrzeugkarosserie befestigten Halteelement gehalten wird. Ein erster und ein zweiter Hebelarm sind dabei als separate Bauteile ausgebildet, welche drehfest miteinander verbunden sind. Der erste Hebelarm dient zu Betätigung durch eine Person, der zweite Hebelarm ist zur Verbindung mit einem durch ein Seil oder eine Stange gebildeten Betätigungsteil ausgebildet.

Die WO 2004/087476 A2 beschreibt einen Handbremshebel aus Kunststoff, welcher drehbar in einem Halter gelagert ist.

Die DE 699 09 679 T2 offenbart einen Handbremsmechanismus für ein Fahrzeug mit einem ersten und einem zweiten Hebel, wobei die beiden Hebel über eine drehbar in einem Halter gelagerte Betätigungsstange miteinander drehfest verbunden sind.

Die bekannten Ausführungen haben den Nachteil, dass viele Einzelteile erforderlich sind, was den Herstellungs- und Montageaufwand erhöht. Außerdem nehmen diese Handbremseinrichtungen relativ viel Bauraum in Anspruch.

Aufgabe der Erfindung ist es, diese Nachteile zu vermeiden und eine mit geringem Fertigungsaufwand herzustellende Handbremseinrichtung zu schaffen, welche wenig Bauraum benötige.

Erfindungsgemäß wird die dadurch erreicht, dass die Formschlussverbindung einen im Profil keilförmigen Verbindungszapfen des zweiten Hebelarms oder des ersten Hebelarms und eine dazu reziprok keilförmig geformte Aufnahme des ersten bzw. zweiten Hebelarms aufweist, wobei der Verbindungszapfen in die Aufnahme eingesteckt ist. Die Formschlussverbindung kann einen mehrkantigen Querschnitt aufweisen.

Die beiden Lager sind - in Richtung der Drehachse betrachtet - beidseitig der Formschlussverbindung angeordnet, wobei vorzugsweise das erste und und/oder das zweite Lager eine Lagerbuchse, vorzugsweise aus Kunststoff, aufweist. Das erste Lager kann dabei Festlager, das zweite Lager als Loslager ausgebildet sein.

Besonders vorteilhaft ist es, wenn erster und zweiter Hebelarm axial mittels zumindest eines Verbindungselementes, vorzugsweise einer Schraub- oder Nietverbindung, miteinander verbunden sind.

Über das Verbindungselement kann das axiale Spiel der Hebel eingestellt werden, wobei vorzugsweise der erste und/oder der zweite Hebelarm axial gegen das erste bzw. zweite Lager gepresst wird.

Im Rahmen der Erfindung ist vorgesehen, dass der erste und/oder der zweite Hebel und/oder der Halter durch einen Leichtmetall-Druckgussteil gebildet ist.

Alternativ dazu kann der erste Hebelarm, der zweite Hebelarm und/oder der Halter auch als Kunststoff-Spritzgussteil ausgeführt sein.

Für die Montage wird der erste Hebelarm in ein in einer ersten Lagerbohrung des Halters angeordnetes erstes Lager eingesetzt. Danach wird der zweite Hebelarm in das in einer zweiten Lagerbohrung des Halters angeordnete zweite Lager eingesetzt und mit dem ersten Hebelarm axial verbunden, wobei der keilförmige Verbindungszapfen in die keilförmige Aufnahmehülse eingeschoben wird. Mittels des Verbindungselementes werden die beiden Hebelarme miteinander fest verbunden.

Die Erfindung wird im Folgenden anhand der Figuren näher erläutert. Es zeigen:
- Fig. 1: eine erfindungsgemäße Handbremseinrichtung in einer Schrägansicht;
- Fig. 2: die Handbremseinrichtung in einem Schnitt gemäß der Linie II-II in Fig. 1;
- Fig. 3: die Handbremseinrichtung in einem Schnitt gemäß der Linie III-III in Fig. 2; und
- Fig. 4: die Handbremseinrichtung in einem Schnitt analog zu Fig. 2 in einer Detailansicht.

Die Handbremseinrichtung 1 weist einen ersten Hebelarm 2 und einen zweiten Hebelarm 3 auf, welche formschlüssig miteinander drehverbunden sind. Die Betätigung der Handbremseinrichtung 1 erfolgt durch eine Person über den ersten Hebelarm 2, welcher die Drehbewegung um die Drehachse 4 auf den zweiten Hebelarm 3 überträgt, welcher eine Zug- oder Druckkraft auf einen Betätigungsteil 5, beispielsweise ein Seil oder eine Stange, ausübt.

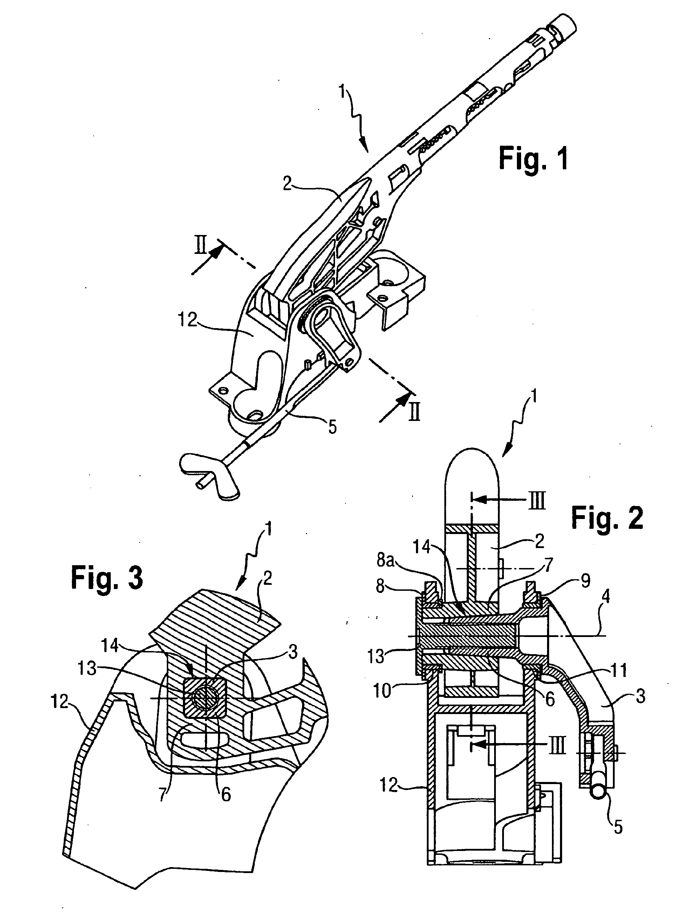

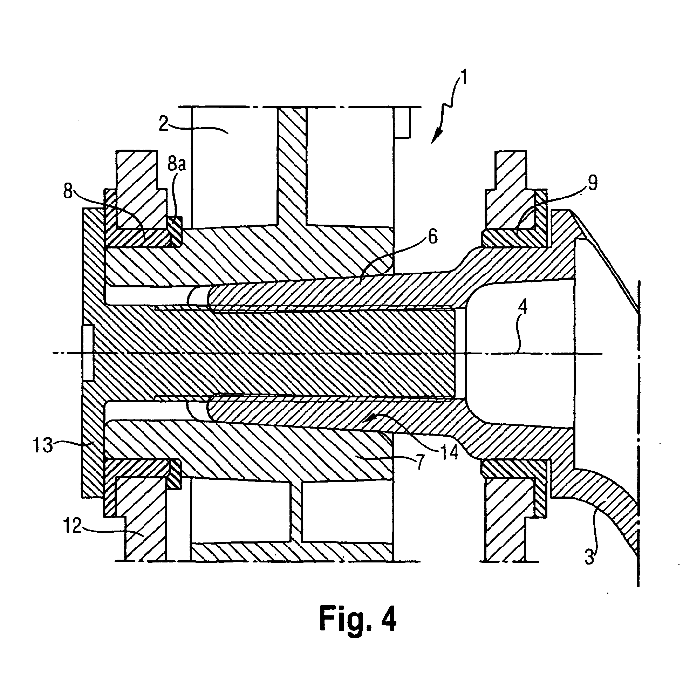

Der zweite Hebelarm 3 weist einen beispielsweise durch einen Vierkant gebildeten Verbindungszapfen 6 auf, welcher in einer reziprok geformte hülsenartigen Aufnahme 7 des ersten Hebelarmes 2 eingeschoben ist. Der Verbindungszapfen 6 und die Aufnahme 7 weisen dabei jeweils ein keilartiges Profil auf, wie aus den Fig. 2 und Fig. 4 ersichtlich ist.

Die Lagerung des ersten Hebelarmes 2 und des zweiten Hebelarmes 3 erfolgt über ein erstes und ein zweites Lager 8, 9, welche beispielsweise durch Kunststoffbuchsen gebildet sein können. Das als Festlager ausgebildete erste Lager 8 ist dabei in einer ersten Lagerbohrung 10, das als Loslager ausgebildete zweite Lager 9 in einer zweiten Lagerbohrung 11 eines fahrzeugfesten Halters 12 angeordnet. Die axiale Verbindung zwischen dem ersten Hebelarm 2 und dem zweiten Hebelarm 3 erfolgt durch ein durch eine Schraub- oder Nietverbindung gebildetes Verbindungselement 13. Über das Verbindungselement 13 kann weiters auch das Spiel der Handbremseinrichtung 1 in Richtung der Drehachse 4 eingestellt werden, was dadurch erfolgt, dass ein Hebelarm, im vorliegenden Beispiel der erste Hebelarm 2, gegen die axiale Anschlagscheibe 8a einer Lagerbuchse, im vorliegenden Fall des ersten Lagers 8, gepresst wird.

In Fig. 3 ist die Formschlussverbindung 14 zwischen dem ersten Hebelarm 2 und dem zweiten Hebelarm 3 im Schnitt dargestellt, welche durch den Verbindungszapfen 6 des zweiten Hebelarms 3 und eine reziprok geformte Aufnahme 7 des ersten Hebelarms 2 gebildet ist. Der Verbindungszapfen 6 und die Aufnahme 7 können im Querschnitt zwei-, vier- oder sechskantig oder als Vielzahn oder Polygonteilung ausgebildet sein. Durch die unmittelbare Verbindung zwischen erstem und zweitem Hebelarm 2, 3 können Bauteile eingespart, der Fertigungsaufwand und der Platzbedarf minimiert werden.

Zum Zusammenbau wird der erste Hebelarm 2 in das erste Lager 8 eingesetzt und danach der zweite Hebelarm 3 in gleicher Richtung wie der erste Hebelarm 2 in das zweite Lager 9 eingeführt, wobei der Verbindungszapfen 6 und die Aufnahme 7 formschlüssig ineinander greifen und so eine Drehverbindung zwischen erstem und zweitem Hebelarm 2, 3 schaffen. Die axiale Fixierung und Einstellung des axialen Lagerspiels erfolgt über das Verbindungselement 13.

Die beschriebene konstruktive Gestaltung der Handbremseinrichtung 1 ermöglicht es, den ersten Hebelarm 2 und den zweiten Hebelarm 3 im Leichtmetall-Druckgussverfahren herzustellen. Auch der Halter 12 kann als Leichtmetall-Druckgussteil oder als Stahlblechteil ausgebildet sein. Alternativ dazu ist es auch möglich, den ersten Hebelarm 2, den zweiten Hebelarm 3 und/oder den Halter 12 im Kunststoffspritzgussverfahren herzustellen.

## Patentansprüche

1. Handbremseinrichtung (1) mit einem ersten Hebelarm (2) zur Betätigung durch eine Person und einem zweiten Hebelarm (3) zur Verbindung mit einem vorzugsweise durch ein Seil oder eine Stange gebildeten Betätigungsteil (5), wobei erster und zweiter Hebelarm (2, 3) als separate Bauteile ausgebildet sind, welche drehfest miteinander verbunden sind, und wobei die Hebelarme (2, 3) in einem fahrzeugfesten Halter (12) um eine Drehachse (4) drehbar gelagert sind, wobei der erste und der zweite Hebelarm (2, 3) über eine Formschlussverbindung (14) unmittelbar miteinander verbunden, vorzugsweise formschlüssig ineinander gesteckt sind und dass der erste Hebelarm (2) über ein erstes Lager (8) und der zweite Hebelarm (3) über ein zweites Lager (9) im fahrzeugfesten Halter (12) gelagert ist, **dadurch gekennzeichnet, dass** die Formschlussverbindung (14) einen im Profil keilförmigen Verbindungszapfen (6) des zweiten Hebelarms (3) oder des ersten Hebelarms (2) und eine dazu reziprok keilförmig geformte Aufnahme (7) des ersten, bzw. zweiten Hebelarms (2, 3) aufweist, wobei der Verbindungszapfen (6) in die Aufnahme (7) eingesteckt ist.

2. Handbremseinrichtung (1) nach Anspruch 1, **dadurch gekennzeichnet, dass** die Formschlussverbindung (14) einen mehrkantigen Querschnitt aufweist.

3. Handbremseinrichtung (1) nach Anspruch 1 oder 2, **dadurch gekennzeichnet, dass** die Formschlussverbindung (14) zwischen dem ersten und dem zweiten Lager (8, 9) angeordnet ist.

4. Handbremseinrichtung (1) nach einem der Ansprüche 1 bis 3, **dadurch gekennzeichnet, dass** erster und zweiter Hebelarm (2, 3) axial mittels zumindest eines Verbindungselementes (13), vorzugsweise einer Schraub- oder Nietverbindung, miteinander verbunden sind.

5. Handbremseinrichtung (1) nach Anspruch 4, **dadurch gekennzeichnet, dass** mittels des Verbindungselementes (13) das axiale Spiel der Handbremseinrichtung (1) einstellbar ist, wobei vorzugsweise der erste und/oder zweite Hebelarm (2, 3) axial gegen das erste, bzw. zweite Lager (8, 9) gepresst wird.

6. Handbremseinrichtung (1) nach einem der Ansprüche 1 bis 5, **dadurch gekennzeichnet, dass** das erste und/oder das zweite Lager (8, 9) eine Lagerbuchse, vorzugsweise aus Kunststoff, aufweist.

7. Handbremseinrichtung (1) nach einem der Ansprüche 1 bis 6, **dadurch gekennzeichnet, dass** der erste und/oder der zweite Hebelarm (2, 3) und/oder der Halter (12) durch einen Leichtmetall-Druckgussteil gebildet ist.

8. Handbremseinrichtung (1) nach einem der Ansprüche 1 bis 7, **dadurch gekennzeichnet, dass** der erste Hebelarm (2) und/oder der zweite Hebelarm (3) und/oder der Halter (12) durch einen Kunststoff-Spritzgussteil gebildet ist.

## Claims

1. Handbrake assembly (1) comprising a first lever arm (2), which is to be actuated by a person, and a second lever arm (3), which connects to an actuating part (5) formed preferably by a rope or a rod, where the first and second lever arms (2, 3) are configured as separate parts, which are non-rotatably joined, and where the lever arms (2, 3) are borne in a vehicle-fixed bracket (12) and can turn about an axle (4), the first and second lever arms (2, 3) being directly attached to each other via a positive-locking connection (14), i.e. the one being preferably inserted into the other so as to be positive-locking, and the first lever arm (2) being borne in the vehicle-fixed bracket (12) via a first bearing (8) and the second lever arm (3) via a second bearing (9), **characterised in that** the positive-locking connection (14) is formed by a connecting neck (6) of the second lever arm (3) or of the first lever arm (2), with conical profile and a corresponding conically-profiled receiving recess (7) of the first, respectively second lever arm (2, 3), with the connecting neck (6) being inserted into the recess (7).

2. Handbrake assembly (1) according to claim 1, **characterised in that** the positive-locking connection (14) has a polygonal cross-section.

3. Handbrake assembly (1) according to claim 1 or 2, **characterised in that** the positive-locking connection (14) is positioned between the first and second bearing (8, 9).

4. Handbrake assembly (1) according to any of claims 1 to 3, **characterised in that** the first and second lever arms (2, 3) are axially connected by at least one connecting element (13), preferably a screw or a rivet connection.

5. Handbrake assembly (1) according to claim 4, **characterised in that** the axial play of the handbrake assembly (1) can be adjusted by means of the connecting element (13), with preferably the first and/or second lever arm (2, 3) being axially pressed against the first, respectively second bearing (8, 9).

6. Handbrake assembly (1) according to any of claims 1 to 5, **characterised in that** the first and/or the second bearing (8, 9) has a bearing bush, preferably made of plastic material.

7. Handbrake assembly (1) according to any of claims 1 to 6, **characterised in that** the first and/or second lever arm (2, 3) and/or the bracket (12) are light-metal die-cast parts.

8. Handbrake assembly (1) according to any of claims 1 to 7, **characterised in that** the first lever arm (2) and/or the second lever arm (3) and/or the bracket (12) are plastic injection-moulded parts.

## Revendications

1. Installation de frein à main (1) comportant un premier bras de levier (2) pour être actionné manuellement et un second bras de levier (3) relié à un organe d'actionnement (5) constitué de préférence par un câble ou une tige,
un premier et un second bras de levier (2, 3) étant réalisés sous la forme de pièces distinctes, reliées solidairement en rotation, et
les bras de levier (2, 3) sont montés à rotation dans un support (12) solidaire du véhicule, autour d'un axe de rotation (4),
le premier et le second bras de levier (2, 3) étant reliés directement par une liaison par la forme (14) en étant engagés de préférence l'un dans l'autre par une liaison par la forme, et
le premier bras de levier (2) est monté par l'intermédiaire d'un premier palier (8) dans le support (12) solidaire du véhicule et le second bras de levier (3) est monté par l'intermédiaire d'un second palier (9) du support (12) solidaire du véhicule,
installation **caractérisée en ce que**
la liaison par la forme (14) comprend un goujon de liaison (6) ayant un profil en forme de coin pour le second bras de levier (3) ou le premier bras de levier (2) et un logement (7) en forme de coin, réciproque, pour le premier ou le second bras de levier (2, 3),
le goujon de liaison (6) étant engagé dans le logement (7).

2. Installation de frein à main selon la revendication 1,
**caractérisée en ce que**
la liaison par la forme (14) a une section polygonale.

3. Installation de frein à main selon la revendication 1 ou 2,
**caractérisée en ce que**
la liaison par la forme (14) est prévue entre le premier et le second paliers (8, 9).

4. Installation de frein à main selon l'une des revendications 1 à 3,
**caractérisée en ce qu'**
un premier et un second bras de levier (2, 3) sont reliés axialement par l'intermédiaire d'au moins un élément de liaison (13), de préférence une liaison à vis ou une liaison par rivet.

5. Installation de frein à main selon la revendication 4,
**caractérisée en ce que**
l'élément de liaison (13) règle le jeu axial de l'installation de frein (1) et de préférence le premier et/ou le second bras de levier (2, 3) sont pressés axialement contre le premier ou le second palier (8, 9).

6. Installation de frein à main selon l'une des revendications 1 à 5,
**caractérisée en ce que**
le premier et/ou le second palier (8, 9) comportent un coussinet, de préférence en matière plastique.

7. Installation de frein à main selon l'une des revendications 1 à 6,
**caractérisée en ce que**
le premier et/ou le second bras de levier (2, 3) et/ou le support (12) sont des pièces injectées en métal léger.

8. Installation de frein à main selon l'une des revendications 1 à 7,
**caractérisée en ce que**
le premier bras de levier (2) et/ou le second bras de levier (3) et/ou le support (12) sont des pièces injectées en matière plastique.
